(19) Europäisches Patentamt
European Patent Office
Office européen des brevets

(11) EP 4 576 890 A1

(12) EUROPEAN PATENT APPLICATION
published in accordance with Art. 153(4) EPC

(43) Date of publication:
25.06.2025 Bulletin 2025/26

(51) International Patent Classification (IPC):
H04W 52/42 (2009.01)     H04W 16/28 (2009.01)
H04W 52/32 (2009.01)     H04W 88/02 (2009.01)

(21) Application number: 22955763.2

(52) Cooperative Patent Classification (CPC):
H04W 16/28; H04W 52/32; H04W 52/42;
H04W 88/02

(22) Date of filing: 19.08.2022

(86) International application number:
PCT/JP2022/031409

(87) International publication number:
WO 2024/038591 (22.02.2024 Gazette 2024/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Tokyo 100-6150 (JP)

(72) Inventors:
• MATSUMURA, Yuki
Tokyo 100-6150 (JP)

• NAGATA, Satoshi
Tokyo 100-6150 (JP)
• SUN, Weiqi
Beijing 100190 (CN)
• WANG, Jing
Beijing 100190 (CN)
• CHEN, Lan
Beijing 100190 (CN)

(74) Representative: Hoffmann Eitle
Patent- und Rechtsanwälte PartmbB
Arabellastraße 30
81925 München (DE)

(54) TERMINAL, WIRELESS COMMUNICATION METHOD, AND BASE STATION

(57) A terminal according to one aspect of the present disclosure includes a receiving section that receives two downlink control informations (DCIs), the two DCIs scheduling two physical uplink control channels (PUCCHs) overlapped in time, the two PUCCHs being related to different panels, and a control section that determines transmission power for the two PUCCHs by assuming at least one of multi-panel simultaneous transmission and single-panel transmission. According to one aspect of the present disclosure, transmission power control when multi-panel simultaneous transmission is supported can be appropriately performed.

FIG. 10

EP 4 576 890 A1

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems, a UE can use a multi-panel (or a multi-beam) for uplink (UL) transmission. To improve throughput/reliability in a UL, support of simultaneous transmission using a multi-panel to one or more transmission/reception points (TRPs) has been under study.

However, transmission power control when multi-panel simultaneous transmission is supported has not been clarified. This may inhibit transmission control from being appropriately performed and may reduce communication throughput.

In view of this, the present disclosure has one object to provide a terminal, a radio communication method, and a base station that can appropriately perform transmission power control when multi-panel simultaneous transmission is supported.

Solution to Problem

A terminal according to one aspect of the present disclosure includes a receiving section that receives two downlink control informations (DCIs), the two DCIs scheduling two physical uplink control channels (PUCCHs) overlapped in time, the two PUCCHs being related to different panels, and a control section that determines transmission power for the two PUCCHs by assuming at least one of multi-panel simultaneous transmission and single-panel transmission.

Advantageous Effects of Invention

According to one aspect of the present disclosure, transmission power control when multi-panel simultaneous transmission is supported can be appropriately performed.

Brief Description of Drawings

[FIG. 1] FIG. 1A to FIG. 1C are diagrams to show examples of PUSCH transmission using a plurality of panels.
[FIG. 2] FIG. 2A and FIG. 2B are diagrams to show examples of PUCCH transmission using a plurality of panels.
[FIG. 3] FIG. 3 is a diagram to show an example of multi-panel simultaneous transmission PUSCHs in multi-DCI and a multi-TRP.

[FIG. 4] FIG. 4 is a diagram to show a first example in which PUSCH A overlaps PUSCH B.
[FIG. 5] FIG. 5 is a diagram to show a second example in which PUSCH A overlaps PUSCH B.
[FIG. 6] FIG. 6 is a diagram to show a third example in which PUSCH A overlaps PUSCH B.
[FIG. 7] FIG. 7 is a diagram to show a fourth example in which PUSCH A overlaps PUSCH B.
[FIG. 8] FIG. 8 is a diagram to show a fifth example in which PUSCH A overlaps PUSCH B.
[FIG. 9] FIG. 9 is a diagram to show a sixth example in which PUSCH A overlaps PUSCH B.
[FIG. 10] FIG. 10 is a diagram to show an example in which two PUCCHs overlap.
[FIG. 11] FIG. 11 is a diagram to show an example in which a PUCCH and a PUSCH overlap.
[FIG. 12] FIG. 12 is a diagram to show an example of transmission power control according to Embodiment 3.1.
[FIG. 13] FIG. 13 is a diagram to show an example of transmission power control according to Embodiment 3.2.
[FIG. 14] FIG. 14 is a diagram to show a first example of transmission power control according to Embodiment 3.3.
[FIG. 15] FIG. 15 is a diagram to show a second example of transmission power control according to Embodiment 3.3.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

Description of Embodiments

(Multi-Panel Transmission)

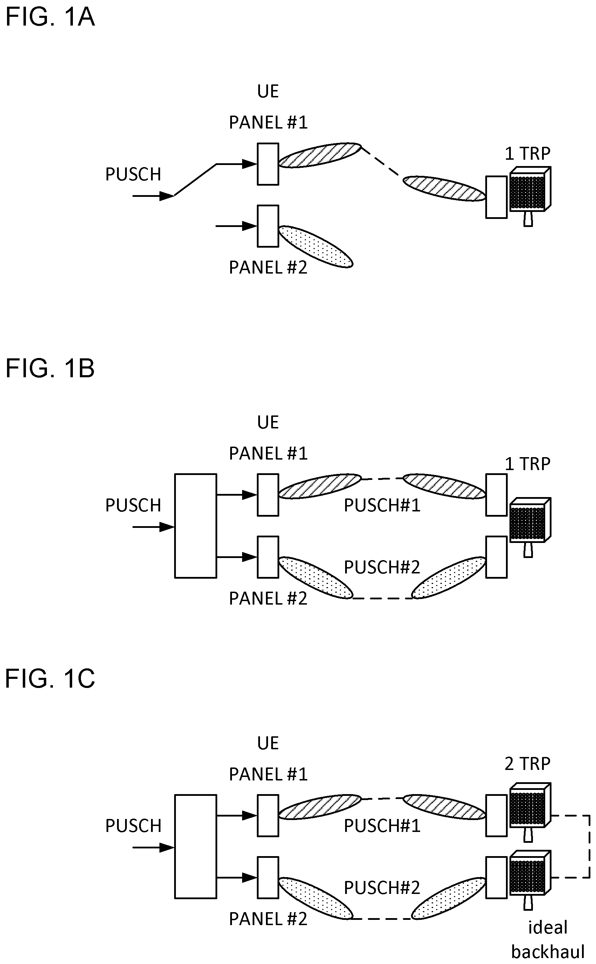

In Rel-15 and Rel-16 UEs, only one beam or panel is used for UL transmission at one time point (FIG. 1A) (single-panel transmission). In Rel. 17, to improve throughput and reliability in a UL, simultaneous UL transmission of a multi-beam (a plurality of beams) and a multi-panel (a plurality of panels) to one or more transmission/reception points (TRPs) has been under study.

For the simultaneous UL transmission using a multi-beam and a multi-panel, reception performed by one TRP including a multi-panel (FIG. 1B) or reception performed by two TRPs having an ideal backhaul (FIG. 1C) has been under study. A single PDCCH for scheduling of a plurality of PUSCHs (for example, simultaneous transmission of PUSCH #1 and PUSCH #2) has been under study. Support of panel-specific transmission and introduction of a panel ID have been under study.

A base station may configure or indicate panel-specific transmission for UL transmission by using a UL transmission configuration indication (TCI) or the panel ID. A UL TCI (UL TCI state) may be based on signaling similar to a DL beam indication supported in Rel. 15. The panel ID may be implicitly or explicitly applied to transmission of at least one of a target RS resource or a target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

In simultaneous UL transmission using a multi-panel, the UE may perform transmission of a plurality of physical uplink control channels (PUCCHs). As transmission schemes of simultaneous UL transmission using a multi-panel for PUCCHs, the following schemes 1 and 2 have been under study.

[Scheme 1]

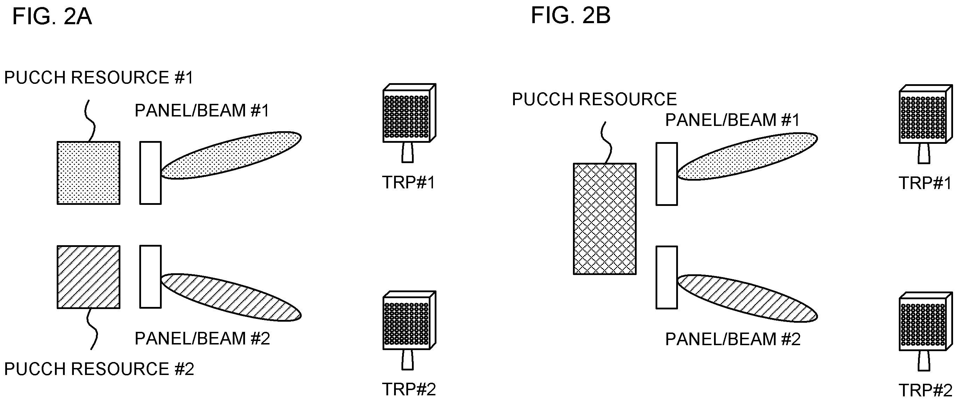

Two PUCCH resources overlap in the time domain and are simultaneously transmitted. Each of the two PUCCH resources is associated with one different panel/beam (see FIG. 2A). The two beams are transmitted to the TRPs, respectively.

[Scheme 2]

One PUCCH resource is simultaneously transmitted using two panels/spatial relations. The one PUCCH resource is associated with two panels/beams (see FIG. 2B). The two beams are transmitted to the TRPs, respectively.

Note that, although the above has described an example of a case in which the number of multiple panels is 2, in the present disclosure, the number of panels may be 3 or greater. In other words, "2" as the number of panels may be interpreted as a number of 3 or greater.

Note that scheme 2 may be applied to PUCCH repetition transmission (repetition) of a single frequency network (SFN).

(UL TCI State)

In Rel-16 NR, as a UL beam indication method, use of a UL TCI state has been under study. Notification of the UL TCI state is similar to notification of a DL beam (DL TCI state) of the UE. Note that the DL TCI state may be interchangeably interpreted as a TCI state for a PDCCH/PDSCH.

A channel/signal (which may be referred to as a target channel/RS) for which the UL TCI state is configured (indicated) may be at least one of a PUSCH (a PUSCH DMRS), a PUCCH (a PUCCH DMRS), a random access channel (Physical Random Access Channel (PRACH)), an SRS, and the like, for example.

For example, the RS (source RS) to have a QCL relationship with the channel/signal may be a DL RS (for example, an SSB, a CSI-RS, a TRS, or the like), or may be a UL RS (for example, an SRS, an SRS for beam management, or the like).

In the UL TCI state, the RS to have a QCL relationship with the channel/signal may be associated with the panel ID for receiving or transmitting the RS. The association may be explicitly configured (or indicated) by higher layer signaling (for example, RRC signaling, a MAC CE, or the like), or may be implicitly determined.

Correspondence between the RS and the panel ID may be configured by being included in UL TCI state information, or may be configured by being included in at least one of resource configuration information, spatial relation information, and the like of the RS.

QCL types indicated by the UL TCI state may be existing QCL types A to D, may be other QCL types, or may include given spatial relation, a related antenna port (port index), or the like.

When the UE is indicated with a related panel ID (for example, indicated by DCI) regarding UL transmission, the UE may perform the UL transmission by using a panel corresponding to the panel ID. The panel ID may be associated with the UL TCI state, and when the UE is indicated (or activated) with the UL TCI state regarding a given UL channel/signal, the UE may identify a panel to be used for transmission of the UL channel/signal in accordance with the panel ID related to the UL TCI state.

(Transmission Power Control)

<Transmission Power Control for PUSCH>

In NR (for example, Rel. 16 and Rel. 17), transmission power for the PUSCH is controlled based on a TPC command (also referred to as a value, an increased/decreased value, a correction value, or the like) that is indicated by a value of a given field (also referred to as a TPC command field or the like) in DCI.

For example, when the UE transmits the PUSCH on an active UL BWP b of a carrier f of a serving cell c by using a parameter set (open loop parameter set) having an index j and an index l of a power control adjustment state, transmission power ($P_{PUSCH,b,f,c}(i, j, q_d, l)$) for the PUSCH in a PUSCH transmission occasion (also referred to as a transmission period or the like) i may be expressed as in the following equation (1).

[Math. 1]

$$\text{Equation (1)}$$

$$P_{PUSCH b,f,c}(i, j, q_d, l)$$

$$= \min \begin{cases} P_{CMAX,f,c}(i), \\ P_{O\_PUSCH b,f,c}(j) + 10\log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,l) \end{cases} \text{[dBm]}$$

Here, whether the power control adjustment state has a plurality of states (for example, two states) or a single state may be configured by using a higher layer parameter. When a plurality of power control adjustment states are configured, one of the plurality of power control adjustment states may be identified with the index l (for example, $l \in \{0, 1\}$). The power control adjustment state may be referred to as a PUSCH power control adjustment state, a first or second state, or the like.

The PUSCH transmission occasion i is a given period in which the PUSCH is transmitted, and may include one or more symbols, one or more slots, or the like, for example.

In equation (1), $P_{CMAX,f,c(i)}$ is, for example, transmission power (also referred to as maximum transmission power, UE maximum output power, or the like) for the user terminal configured for the carrier f of the serving cell c in the transmission occasion i. $P_{O\_PUSCH,b,f,c}(j)$ is, for example, a parameter (for example, also referred to as a parameter related to a transmission power offset, a transmission power offset P0, a target received power parameter, or the like) related to target received power that is configured for the active UL BWP b of the carrier f of the serving cell c in a parameter set configuration j.

$M^{PUSCH}_{PB,b,f,c}(i)$ is, for example, the number of resource blocks (bandwidth) allocated for the PUSCH for the transmission occasion i in the active UL BWP b of the carrier f of the serving cell c and a subcarrier spacing $\mu$. $\alpha_{b,f,c}(j)$ is a value provided by a higher layer parameter (for example, also referred to as msg3-Alpha, p0-PUSCH-Alpha, a fractional factor, or the like).

$PL_{b,f,c}(q_d)$ is, for example, path loss (path loss compensation) that is calculated in the user terminal by using an index $q_d$ of a reference signal (a path loss reference RS, a DL RS for path loss measurement, PUSCH-PathlossReferenceRS) for the downlink BWP associated with the active UL BWP b of the carrier f of the serving cell c.

$\Delta_{TF,b,f,c}(i)$ is a transmission power adjustment component (offset, transmission format compensation) for the UL BWP b of the carrier f of the serving cell c.

$f_{b,f,c}(i, l)$ is a value (for example, a power control adjustment state, an accumulated value of the TPC commands, or a value by a closed loop) based on a TPC command of the power control adjustment state index l of the active UL BWP of the carrier f of the serving cell c and the transmission occasion i. l may be referred to as a closed loop index.

When the UE is not provided with the path loss reference RS (for example, PUSCH-PathlossReferenceRS) or the UE is not provided with a dedicated higher layer parameter, the UE may calculate $PL_{b,f,c}(q_d)$ by using RS resources from the SSB used to obtain a Master Information Block (MIB).

When the UE is configured with RS resource indices of which number is up to the value of the maximum number (for example, maxNrofPUSCH-PathlossReferenceRS) of path loss reference RSs and a set of RS configurations for each of the RS resource indices by the path loss reference RSs, the set of RS resource indices may include one or both of a set of SS/PBCH block indices and a set of CSI-RS resource indices. The UE may identify the RS resource index $q_d$ in the set of RS resource indices.

When PUSCH transmission is scheduled by a Random Access Response (RAR) UL grant, the UE may use the same RS resource index $q_d$ as that for corresponding PRACH transmission.

When the UE is provided with a configuration (for example, SRI-PUSCH-PowerControl) of power control of the PUSCH by a sounding reference signal (SRS) resource indicator (SRI) and the UE is provided with one or more values of IDs of the path loss reference RSs, the UE may obtain mapping between a set of values for an SRI field in DCI format 0_1 and a set of ID values of the path loss reference RSs from higher layer signaling (for example, sri-PUSCH-PowerControl-Id in SRI-PUSCH-PowerControl). The UE may determine the RS resource index $q_d$ from the IDs of the path loss reference RSs mapped to the SRI field values in DCI format 0_1 for scheduling the PUSCH.

When PUSCH transmission is scheduled by DCI format 0_0 and the UE is not provided with PUCCH spatial relation information regarding PUCCH resources having the lowest index for the active UL BWP b of each carrier f and the serving cell c, the UE may use the same RS resource index $q_d$ as that for PUCCH transmission in the PUCCH resources.

When PUSCH transmission is scheduled by DCI format 0_0, and the UE is not provided with space setting of PUCCH transmission, or PUSCH transmission is scheduled by DCI format 0_1 not including the SRI field, or a configuration of power control of the PUSCH using the SRI is not provided for the UE, the UE may use the RS resource index $q_d$ including the ID of the path loss reference RS of "0".

When a configured grant configuration (for example, ConfiguredGrantConfig) includes a given parameter (for example, rrc-CofiguredUplinkGrant) for PUSCH transmission configured by the configured grant configuration, the RS resource index $q_d$ may be provided for the UE by a path loss reference index (for example, pathlossReferenceIndex) in the given parameter.

When the configured grant configuration does not include the given parameter for PUSCH transmission configured by the configured grant configuration, the UE may determine the RS resource index $q_d$ from the value of the ID of the path loss reference RS mapped to the SRI field in a DCI format for activating the PUSCH transmission. When the DCI format does not include the SRI field, the UE may determine the RS resource index $q_d$ including the ID of the path loss reference RS of "0".

<Transmission Power Control for PUCCH>

In NR, transmission power for the PUCCH is controlled based on a TPC command (also referred to as a value, an increased/decreased value, a correction value, an indication value, or the like) indicated by a value of a given field (also referred to as a TPC command field, a first field, or the like) in DCI.

For example, by using the index l of the power control adjustment state, transmission power ($P_{PUCCH,b,f,c}(i, q_u, q_d, l)$) for the PUCCH in a PUCCH transmission occasion (also referred to as a transmission period or the like) i regarding the active UL BWP b of the carrier f of the serving cell c may be expressed as in the following equation (2).

[Math. 2]

Equation (2)

$$P_{\text{PUCCH},b,f,c}(i,q_u,q_d,l)$$

$$= \min\left\{\begin{array}{l} P_{\text{CMAX},f,c}(i), \\ P_{\text{O\_PUCCH},b,f,c}(q_u) + 10\log_{10}(2^\mu \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array}\right\} \text{[dBm]}$$

The power control adjustment state may be referred to as a PUCCH power control adjustment state, a first or second state, or the like.

The PUCCH transmission occasion i is a given period in which the PUCCH is transmitted, and may include one or more symbols, one or more slots, or the like, for example.

In equation (2), $P_{\text{CMAX},f,c}(i)$ is, for example, transmission power (also referred to as maximum transmission power, UE maximum output power, or the like) for the user terminal configured for the carrier f of the serving cell c in the transmission occasion i. $P_{\text{O\_PUCCH},b,f,c}(q_u)$ is, for example, a parameter (for example, also referred to as a parameter related to a transmission power offset, a transmission power offset P0, a target received power parameter, or the like) related to target received power that is configured for the active UL BWP b of the carrier f of the serving cell c in the transmission occasion i.

$M_{\text{PB},b,f,c}^{\text{PUCCH}}(i)$ is, for example, the number of resource blocks (bandwidth) allocated for the PUCCH for the transmission occasion i in the active UL BWP b of the carrier f of the serving cell c and the subcarrier spacing $\mu$. $PL_{b,f,c}(q_d)$ is, for example, path loss that is calculated in the user terminal by using the index $q_d$ of a reference signal (a path loss reference RS, a DL RS for path loss measurement, PUCCH-PathlossReferenceRS) for the downlink BWP associated with the active UL BWP b of the carrier f of the serving cell c.

$\Delta_{\text{F\_PUCCH}}(F)$ is a higher layer parameter given for each PUCCH format. $\Delta_{\text{TF},b,f,c}(i)$ is a transmission power adjustment component (offset) for the UL BWP b of the carrier f of the serving cell c.

$g_{b,f,c}(i,l)$ is a value (for example, a power control adjustment state, an accumulated value of the TPC commands, a value by a closed loop, or a PUCCH power adjustment state) based on a TPC command of the power control adjustment state index l of the active UL BWP of the carrier f of the serving cell c and the transmission occasion i.

If the UE is provided with information (twoPUCCH-PC-AdjustmentStates) indicating use of two PUCCH power control adjustment states and the PUCCH spatial relation information (PUCCH-SpatialRelationInfo), l = {0, 1} may hold, whereas if the UE is not provided with the information indicating use of two PUCCH power control adjustment states or the PUCCH spatial relation information, l = 0 may hold.

If the UE obtains the TPC command value from DCI format 1_0 or 1_1 and the UE is provided with the PUCCH spatial relation information, the UE may obtain mapping between a PUCCH spatial relation information ID (pucch-SpatialRelationInfoId) value and the closed loop index (closedLoopIndex, power adjustment state index l) by using an index provided by a P0 ID for the PUCCH (p0-PUCCH-Id in p0-Set in PUCCH-PowerControl in PUCCH-Config). When the UE receives an activation command including the value of the PUCCH spatial relation information ID, the UE may determine the value of the closed loop index providing the value of l via a link to a corresponding P0 ID for the PUCCH.

If the UE is provided with a configuration of a $P_{\text{O\_PUCCH},b,f,c}(q_u)$ value for a corresponding PUCCH power adjustment state l regarding the active UL BWP b of the carrier f of the serving cell c by a higher layer, $g_{b,f,c}(i, l) = 0$ and k = 0, 1,..., i. If the UE is provided with the PUCCH spatial relation information, the UE may determine the value of l from the value of $q_u$, based on the PUCCH spatial relation information associated with the P0 ID for the PUCCH corresponding to $q_u$ and the closed loop index value corresponding to l.

$q_u$ may be the P0 ID for PUCCH (p0-PUCCH-Id) indicating P0 for the PUCCH (P0-PUCCH) in a P0 set (p0-Set) for the PUCCH.

<Transmission Power Control for SRS>

For example, by using the index l of the power control adjustment state, transmission power ($P_{\text{SRS},b,f,c}(i, q_s, l)$) for a Sounding Reference Signal (SRS) in an SRS transmission occasion (also referred to as a transmission period or the like) i regarding the active UL BWP b of the carrier f of the serving cell c may be expressed as in the following equation (3).

The power control adjustment state may be referred to as an SRS power control adjustment state, a value based on a TPC command, an accumulated value of the TPC commands, a value by a closed loop, a first or second state, or the like. l may be referred to as a closed loop index.

The SRS transmission occasion i is a given period in which the SRS is transmitted, and may include one or more symbols, one or more slots, or the like, for example.
[Math. 3]

Equation (3)

$$P_{SRS,b,f,c}(i,q_s,l) = \min \begin{cases} P_{CMAX,f,c}(i), \\ P_{O\_SRS,b,f,c}(q_s) + 10\log_{10}(2^{\mu} \cdot M_{SRS,b,f,c}(i)) + \alpha_{SRS,b,f,c}(q_s) \cdot PL_{b,f,c}(q_d) + h_{b,f,c}(i,l) \end{cases}$$

$$[\text{dBm}]$$

In equation (3), $P_{CMAX,f,c}(i)$ is, for example, UE maximum output power for the carrier f of the serving cell c in the SRS transmission occasion i. $P_{O\_SRS,b,f,c}(q_s)$ is, for example, a parameter (for example, also referred to as a parameter related to a transmission power offset, a transmission power offset P0, a target received power parameter, or the like) related to target received power that is provided by p0 for the active UL BWP b of the carrier f of the serving cell c and an SRS resource set $q_s$ (provided by SRS-ResourceSet and SRS-ResourceSetId).

$M_{SRS,b,f,c}(i)$ is an SRS bandwidth represented by the number of resource blocks for the SRS transmission occasion i on the active UL BWP b of the carrier f of the serving cell c and the subcarrier spacing $\mu$.

$\alpha_{SRS,b,f,c}(q_s)$ is provided by $\alpha$ (for example, alpha) for the active UL BWP b of the carrier f of the serving cell c and the subcarrier spacing $\mu$ and for the SRS resource set $q_s$.

$PL_{b,f,c}(q_d)$ is a DL path loss estimation value [dB] that is calculated by the UE by using the RS resource index $q_d$ for the active DL BWP of the serving cell c and the SRS resource set $q_s$. The RS resource index $q_d$ is a path loss reference RS (a DL RS for path loss measurement, which is provided by pathlossReferenceRS, for example) associated with the SRS resource set $q_s$, and is the SS/PBCH block index (for example, ssb-Index) or the CSI-RS resource index (for example, csi-RS-Index).

$h_{b,f,c}(i, l)$ is an SRS power control adjustment state for the active UL BWP of the carrier f of the serving cell c and for the SRS transmission occasion i. When a configuration (for example, srs-PowerControlAdjustmentStates) of the SRS power control adjustment state indicates the same power control adjustment state for SRS transmission and PUSCH transmission, $h_{b,f,c}(i, l)$ is the same as the current PUSCH power control adjustment state $f_{b,f,c}(i, l)$.

The transmission occasion i of the PUSCH, the PUCCH, and the SRS may be defined by a slot index $n_{s,f}^{\mu}$ in a frame of a system frame number SFN, a first symbol S in a slot, and the number L of consecutive symbols. In a case of PUSCH transmission of repetition type B, the transmission occasion of the PUSCH may be nominal repetition.

(Power Requirement)

In NR, measures against a problem of maximum permitted exposure (MPE) (or electromagnetic power density exposure) have been under study. The UE is required to meet regulations of Federal Communication Commission (FCC) related to maximum radiation to human bodies for the sake of health and safety.

For example, in Rel-15 NR, to limit exposure (exposure), limitation using power-management maximum power reduction (P-MPR, maximum permitted UE output power reduction) is defined. For example, in a case of non-carrier aggregation (CA), the UE maximum output power $P_{CMAX,f,c}$ is configured so that corresponding $P_{UMAX,f,c}$ (maximum output power to be measured, configured maximum UE output power to be measured) satisfies the following relationship (4).
[Math. 4]

$$P_{Powerclass} + \Delta P_{IBE} - MAX(MAN(MPR_{f,c}, A\text{-}MPR_{f,c,}) + \Delta MB_{P,n}, P\text{-}MPR_{f,c}) - MAX\{T(MAX(MPR_{f,c}, A\text{-}MPR_{f,c,})), T(P\text{-}MPR_{f,c})\} \leq P_{UMAX,f,c} \leq EIRP_{max}$$    Relationship (4)

$EIRP_{max}$ is a maximum value of corresponding measured peak effective isotropic radiated power (EIRP). A-$MRP_{f,c}$ represents additional MPR (Additional Maximum Power Reduction) of the carrier f of the serving cell c. P-$MPR_{f,c}$ is a value indicating reduction of maximum output power permitted for the carrier f of the serving cell c. P-$MPR_{f,c}$ is introduced into the expression of the UE maximum output power $P_{CMAX,f,c}$ configured for the carrier f of the serving cell c. Corresponding total radiated power $P_{TMAX,f,c}$ satisfies $P_{TMAX,f,c} \leq TRP_{max}$.

In a case of carrier aggregation (CA), the UE maximum output power $P_{CMAX,f,c}$ is configured so that corresponding $P_{UMAX}$ satisfies the following relationship (5).
[Math. 5]

$P_{Powerclass}$ -MAX(MAX(MPR, A-MPR) +$\Delta MB_{P,n,}$ P-MPR) -MAX{T(MAX(MPR, A-MPR)),T(P-MPR)} ≤ $P_{UMAX}$ ≤ $EIRP_{max}$                    Relationship (5)

Measured $P_{UMAX}$ for carrier aggregation is defined as follows: $P_{UMAX} = \Sigma_{c,f(c)}P_{UMAX,f,c}$. Here, $P_{UMAX,f,c}$ is a linear value of measured power $P_{UMAX,f,c}$ for carrier f = f(c) of the serving cell c. The measured total radiated power $P_{TMAX}$ for carrier aggregation is defined as follows: $P_{TMAX} = 10log_{10}\Sigma_{c,f(c)}P_{TMAX,f,c}$. Here, $P_{TMAX}$ is a linear value of the measurement value of the total radiated power $P_{TMAX,f,c}$ for carrier f = f(c) of the serving cell c. For the total radiated power $P_{TMAX}$, a boundary is defined as follows: $P_{TMAX} \leq TRP_{max}$.

In other words, the UE can configure the maximum output power as $P_{CMAX}$ so that the measured peak EIRP ($P_{UMAX}$) is within a range between a lower limit and an upper limit and the measured total radiated power $P_{TMAX}$ satisfies $P_{TMAX} \leq TRP_{max}$.

(Power Control for Each Panel)

[Transmission Power Control for PUSCH/PUCCH/SRS]

When UL simultaneous transmission from the multi-panel is supported, the UE may receive a configuration related to transmission power for each panel, separately control the transmission power for each panel based on the configuration, and simultaneously transmit UL transmission (PUSCH/PUCCH/SRS) by using the multi-panel (for example, two panels) (in the transmission occasion i). For the configuration, similarly to the existing transmission power control, higher layer signaling (for example, RRC)/physical layer signaling (for example, a TPC command of DCI) or the like may be used.

Note that the transmission power control for the PUSCH/PUCCH/SRS in (Transmission Power Control) described above may hold true for parts not particularly indicated regarding the parameters of the transmission power control for each panel and the like described below.

When the UE transmits the PUSCH from a panel p in the active UL BWP b of the carrier f of the serving cell c by using the parameter set having the index j and the index l of the power control adjustment state, the UE may determine the transmission power ($P_{PUSCH,b,f,c,p}(i, j, q_d, l)$) for the PUSCH in the PUSCH transmission occasion (also referred to as a transmission period or the like) i, based on the following equation (6). Note that p is an index of a panel, and may be configured by higher layer signaling/physical layer signaling.
[Math. 6]

Equation (6)

$$P_{PUSCH,b,f,c,p}(i,j,q_d,l)$$

$$= min\left\{ \begin{array}{c} P_{CMAX_{panel},f,c,p}(i), \\ P_{O\_PUSCH,b,f,c,p}(j) + 10log_{10}(2^{\mu} \cdot M_{RB,b,f,c,p}^{PUSCH}(i) + \alpha_{b,f,c,p}(j) \cdot PL_{b,f,c,p}(q_d) + \Delta_{TF,b,f,c,p}(i) + f_{b,f,c,p}(i,l) \end{array} \right\}$$

$$[dBm]$$

When the UE transmits the PUCCH from a panel, the UE may determine the transmission power ($P_{PUCCH,b,f,c,p}(i, q_u, q_d, l)$) for the PUCCH in the PUCCH transmission occasion i for the active UL BWP b of the carrier f of the serving cell c by using the index l of the power control adjustment state, based on the following equation (7).
[Math. 7]

Equation (7)

$$P_{PUCCH,b,f,c,p}(i,q_u,q_d,l)$$

$$= min\left\{ \begin{array}{c} P_{CMAX_{panel},f,c,p}(i), \\ P_{O\_PUCCH,b,f,c,p}(q_u) + 10log_{10}(2^{\mu} \cdot M_{RB,b,f,c,p}^{PUCCH}(i) + \alpha_{b,f,c,p}(j) \cdot PL_{b,f,c,p}(q_d) + \Delta_{F_{PUCCH},p}(F) + \Delta_{TF,b,f,c,p}(i) + g_{b,f,c,p}(i,l) \end{array} \right\}$$

$$[dBm]$$

When the UE transmits the SRS from a panel, the UE may determine the transmission power ($P_{SRS,b,f,c,p}(i, q_s, l)$) for the SRS in the SRS transmission occasion i for the active UL BWP b of the carrier f of the serving cell c by using the index l of the power control adjustment state, based on the following equation (8).
[Math. 8]

Equation (8)

$$P_{SRS,b,f,c,p}(i, q_s, l) = min \begin{Bmatrix} P_{CMAX_{panel,f,c,p}}(i), \\ P_{O\_SRS,b,f,c,p}(q_s) + 10log_{10}(2^\mu \cdot M_{SRS,b,f,c,p}(i) + \alpha_{b,f,c,p}(q_s) \cdot PL_{b,f,c,p}(q_d) + h_{b,f,c,p}(i,l) \end{Bmatrix}$$
$$[dBm]$$

As shown in equations (6) to (8), the transmission power control of the PUSCH/PUCCH/SRS is different from the existing control shown in equations (1) to (3) in that each element is configured for each panel (p). Description of similarities will be omitted.

Note that equations (6) to (8) are merely examples, and are not limited to these. The user terminal may control the transmission power for the PUSCH/PUCCH/SRS, based on at least one parameter shown in equations (6) to (8), and an additional parameter may be included or a part of the parameters may be omitted. In equations (6) to (8) above, the transmission power for the PUSCH/PUCCH/SRS is controlled for each active UL BWP of a certain carrier of a certain serving cell, but this is not restrictive. At least a part of the serving cell, the carrier, the BWP, and the power control adjustment state may be omitted.

Consequently, the UE can appropriately perform the transmission power control for the PUSCH/PUCCH/SRS for each panel.

(Analysis)

However, transmission power control under a specific condition when multi-panel simultaneous transmission is supported has not been clarified. For example, what sort of control is performed when two UL transmissions (for example, PUSCHs) overlap has not been clarified. This may inhibit transmission control from being appropriately performed and may reduce communication throughput.

In view of this, the inventors of the present invention came up with the idea of a radio communication method for enabling transmission power control when multi-panel simultaneous transmission is supported to be appropriately performed.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of spatial relation informations", and the like. The TCI state and the TCI may be interchangeably interpreted.

In the present disclosure, drop, interrupt, cancel, puncture, rate match, postpone, not transmit, and the like may be interchangeably interpreted.

In the present disclosure, multi-panel simultaneous transmission and multi-panel simultaneous UL transmission may be interchangeably interpreted. In the present disclosure, "to support" and "to be configured/indicated" may be interchangeably interpreted. In the present disclosure, transmission power and output power may be interchangeably interpreted. In the present disclosure, determination by a UE and configuration/indication by a network (base station/gNB) may be interchangeably interpreted.

In the present disclosure, a component carrier (CC), a cell, and a serving cell may be interchangeably interpreted. In the present disclosure, a channel (PUSCH/PUCCH/SRS) and an RS may be interpreted as a panel that transmits the channel and the RS. A unit of transmission power in the present disclosure may be [dBm].

In the present disclosure, power limitation and a power requirement may be interchangeably interpreted. In the present disclosure, a panel, a panel ID, a UE capability value index, a TCI state, an SRI, an SRS resource set, an SRS resource set ID, and a CORESET pool index (CORESETPoolIndex) may be interchangeably interpreted. In the present disclosure, overlapping of two PUSCHs (PUSCH transmissions) may mean overlapping of at least a part of two PUSCHs (PUSCH transmissions) with respect to time.

(Radio Communication Method)

<Problem 1>

When UL simultaneous transmission from the multi-panel is supported, the UE receives a configuration related to transmission power for each panel, separately controls the transmission power for each panel based on the configuration (for example, see equations (6) to (8)), and simultaneously transmits UL transmission (PUSCH/PUCCH/SRS) by using the multi-panel (for example, two panels) (in the transmission occasion i). For the configuration, similarly to the existing transmission power control, higher layer signaling (for example, RRC)/physical layer signaling (for example, a TPC command of DCI) or the like may be used. In this case, the following options are considered regarding determination of the maximum output power $P_{CMAXpanel,f,c,p}$ for each panel p.

[Option 1]

The UE may determine the maximum output power $P_{CMAXpanel,f,c,p}$ for each panel p by using a requirement (boundary) defined based on the peak effective isotropic radiated power (EIRP) measurement value for each UE and the total radiated power measurement value for each UE.

[Option 2]

The UE may determine the maximum output power $P_{CMAXpanel,f,c,p}$ for each panel p (may be configured with the maximum output power) by using a requirement (boundary) defined based on the peak effective isotropic radiated power (EIRP) measurement value for each panel and the total radiated power measurement value for each panel.

However, details of the CA (carrier aggregation) case in option 2 have not been clarified. In view of this, the inventors of the present invention came up with the idea of a radio communication method for enabling transmission power control for each panel to be appropriately performed in the CA case in option 2.

<First Embodiment>

The UE may determine the maximum transmission power $P_{CMAXpanel,f,c,p}$ for each panel p (may be configured with the maximum transmission power) by using a requirement (boundary) defined based on the peak effective isotropic radiated power (EIRP) measurement value for each panel and the total radiated power measurement value for each panel.

In the case of CA, the UE configures the maximum transmission power $P_{CMAXpanel,f,c,p}$ for each panel p of each carrier f of each serving cell c so that $P_{UMAX\_panel,p}$ corresponding to the measured peak EIRP of each panel is within a boundary defined for each panel and the total radiated power $P_{TMAX\_panel,p}$ of the panel is within a given boundary defined for each panel (is equal to or less than a threshold). $P_{UMAX\_panel,p}$ corresponding to the measured peak EIRP of each panel is calculated as the sum of the measured total radiated power of the panels across all of the serving cells. The measured total radiated power $P_{TMAX\_panel,p}$ of the panel is calculated as the sum of the measured total radiated power of the panels across all of the serving cells.

In the case of CA, the UE configures (determines, calculates) the maximum output power $P_{CMAXpanel,f,c,p}$ for each panel p of each carrier f of each serving cell c so that $P_{UMAX\_panel,p}$ corresponding to the measured peak EIRP of each panel and the measured total radiated power $P_{TMAX\_panel,p}$ of the panel are within a given boundary (relationship (9)). Note that, regarding $P_{TMAX\_panel,p}$, the following holds: $P_{TMAX\_panel,p} \leq TRP_{max,p}$. $TRP_{max,p}$ is a maximum value of the total radiated power for each panel.

[Math. 9]

$$P_{powerclass,p} - MAX(MAX(MPR_p, A\text{-}MPR_p) + \Delta MB_{P,n.p}, P\text{-}MPR_p) - MAX\{T(MAX(MPR_p, A\text{-}MPR_p)), T(P\text{-}MPR)\} \leq P_{UMAX\_panel,\ p} \leq EIRP_{max,p} \qquad \text{Relationship (9)}$$

Regarding relationship (9), description of similarities with relationship (4) will be omitted. A parameter with subscripted p is a parameter for each panel.

Note that, when relationship (9) is applied, $P_{UMAX\_panel,p} = \Sigma_{c,f(c)} P_{UMAX,f,c,p}$ may hold. In other words, $P_{UMAX panel,p}$ is the measured peak EIRP of the panel p, and is the sum of the measured peak EIRP of the panels across all of the serving cells.

When relationship (9) is applied, $P_{TMAX\_panel,p} = \Sigma_{c,f(c)} P_{TMAX,f,c,p}$ may hold. In other words, $P_{TMAX\_panel,p}$ is the measured total radiated power of the panel p, and is the sum of the measured total radiated power of the panels across all of the serving cells. $P_{TMAX,f,c,p}$ is a measurement value of peak total radiated power of the panel p in the carrier f of the serving cell c.

[Requirements of Parameters]

A requirement of each parameter (at least one of $P_{powerclass,p}$, $MPR_p$, $A\text{-}MPR_p$, $\Delta MB_{P,n,p}$, $P\text{-}MPR_p$, $EIRP_{max,p}$, and $TRP_{max,p}$) is defined for each panel. The requirement of each parameter may be different between single-panel transmission and multi-panel transmission. For each parameter, the requirement for each UE in Rel. 17 may be reused. In other words, the requirement for each panel of multi-panel simultaneous transmission may be the same as the requirement for the UE in Rel. 17. The requirement for each panel may be different from each other, and may be dependent upon UE capability information reported by the UE. At least one of such parameters may be defined as "0" in advance.

According to the first embodiment, the transmission power for each panel can be appropriately limited.

<Problem 2>

In power control of the PUSCH of multi-panel simultaneous transmission, power limitation (power requirement) may be configured for each UE. In other words, the total power across all of the panels may be configured to satisfy the power limitation for each UE, and the UE may control PUSCH transmission to satisfy the power limitation.

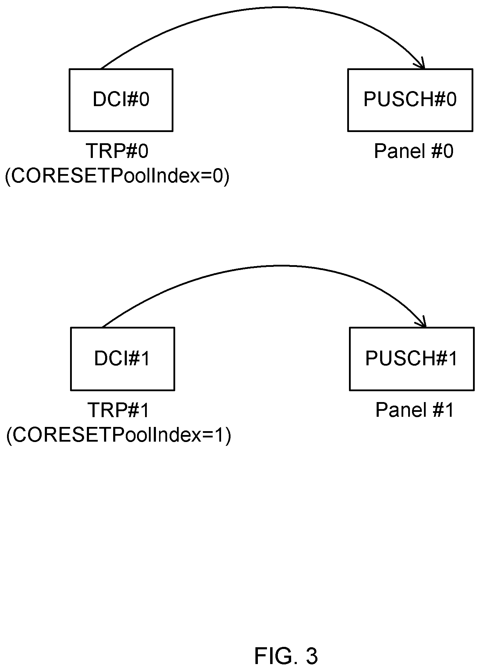

FIG. 3 is a diagram to show an example of multi-panel simultaneous transmission PUSCHs in multi-DCI and a multi-TRP. In a case of the multi-panel simultaneous transmission PUSCHs in the multi-DCI and the multi-TRP, two DCIs may schedule two PUSCHs overlapped in time. When these two PUSCHs are related to different panels/TRPs, the power limitation is configured for the total power of the two panels, and thus the transmission power for one PUSCH affects the transmission power for the other PUSCH.

However, when two PUSCHs partially overlap with respect to time, that is, single-panel transmission is used for a part of the PUSCHs and multi-panel simultaneous transmission is used for a part of the PUSCH, how the transmission power for the PUSCHs are determined has not been clarified. In view of this, the inventors of the present invention came up with the idea of a radio communication method for enabling the transmission power for the PUSCHs to be appropriately controlled in such a case.

<Second Embodiment>

As shown in the example of FIG. 3, the following case is considered: in the multi-panel simultaneous transmission PUSCHs in the multi-DCI and the multi-TRP, the UE receives two downlink control informations (DCIs), two DCIs schedule two PUSCHs in an overlapping manner (at least partially) with respect to time, and the two PUSCHs are related to different panels/TRPs (the two PUSCHs are transmitted from different panels and are transmitted to different TRPs). In this case, the UE determines the transmission power for the two PUSCHs by assuming at least one of multi-panel simultaneous transmission and single-panel transmission. The following options are considered regarding the transmission power control in this case.

Note that "overlap" in the present disclosure may be "overlap" in the same CC, may be "overlap" over a plurality of CCs in the same band, or may be "overlap" over all of the CCs (all of the CCs of all of the bands).

[Option 1]

The UE need not expect that the total transmission power for the two PUSCHs exceeds the power limitation for each UE. In this case, as shown in the transmission power control for the PUSCH described above (equation (1)), the UE may determine the transmission power, based on the parameters configured from the network (base station).

[Option 2]

The UE may determine the transmission power for each PUSCH (two PUSCHs) in time resources overlapped by the two PUSCHs by assuming multi-panel simultaneous transmission, and determine the transmission power for at least one PUSCH of the two PUSCHs in time resources not overlapped by the two PUSCHs by assuming single-panel transmission. In other words, PUSCH transmission power of two parts of one PUSCH time resource may be different.

[Option 3]

The UE may determine the transmission power for at least one entire PUSCH of the two PUSCHs by assuming multi-panel simultaneous transmission.

[Option 4]

The UE may determine the transmission power for at least one entire PUSCH of the two PUSCHs by assuming single-panel transmission.

[Multi-Panel Simultaneous Transmission]

To determine the transmission power for the PUSCHs by assuming multi-panel simultaneous transmission means to determine the transmission power for the PUSCHs in accordance with the power limitation that the total transmission power for the two overlapping PUSCHs does not exceed the power limitation for each UE.

In multi-panel simultaneous transmission, the maximum transmission power ($P_{CMAX}$) configured for the UE is determined for each panel. Actual PUSCH transmission power may be the minimum value of the transmission power configured for the UE for each panel and the transmission power determined based on the parameters for each panel (for example, equation (6)). The parameters may be configured for the UE from the network (base station) via higher layer signaling/physical layer signaling. The power requirement for each panel may be applied (relationship (9)).

In multi-panel simultaneous transmission, when the total transmission power across two panels exceeds the maximum transmission power for each UE, the UE may drop one PUSCH transmission or reduce the transmission power for one panel/a part of the panels/all of the panels in accordance with a rule defined in advance.

[Single-Panel Transmission]

To determine the transmission power for the PUSCHs by assuming single-panel transmission means to determine the transmission power for the PUSCHs in accordance with the power limitation not exceeding the power limitation for each UE (for example, expressions (4) and (5)). In this case, received power of the PUSCH may be determined similarly to Rel. 17 (for example, expression (1)).

When the UE reports a different UE capability, the UE may apply a different option according to the UE capability. When the UE receives a different higher layer parameter, the UE may apply a different option according to the higher layer parameter.

[Control according to Specific Conditions]

In the present embodiment, different options may be applied according to the following specific conditions.

<<Condition 1>>

When PUSCH A and PUSCH B overlap, the condition is whether a start timing of PUSCH A (a first symbol of PUSCH A) is earlier or later than a start timing of PUSCH B (a first symbol of PUSCH B).

For example, the transmission power for the PUSCH with the later start time of the overlapping PUSCHs is determined by assuming multi-panel simultaneous transmission. For example, when a transmission timing of PUSCH A is later than a transmission timing of PUSCH B, the UE determines the transmission power for entire PUSCH A by assuming multi-panel simultaneous transmission (option 3). Alternatively, when PUSCH A is later than PUSCH B, regarding the transmission power for PUSCH A, the UE may determine the transmission power for the time resources overlapping PUSCH B by assuming multi-panel simultaneous transmission, and determine the transmission power for time resources not overlapping PUSCH B by assuming single-panel transmission (option 2).

For example, the transmission power for the PUSCH with the earlier start time of the overlapping PUSCHs may be determined by invariably assuming single-panel transmission. For example, when the transmission timing of PUSCH A is earlier than the transmission timing of PUSCH B, the UE may determine the transmission power for entire PUSCH A by assuming single-panel transmission (option 4). Alternatively, when the transmission timing of PUSCH A is earlier than the transmission timing of PUSCH B, regarding the transmission power for PUSCH A, the UE may determine the transmission power for the time resources overlapping PUSCH B by assuming multi-panel simultaneous transmission, and determine the transmission power for the time resources not overlapping PUSCH B by assuming single-panel transmission (option 2).

<<Condition 2>>

When PUSCH A overlaps PUSCH B, the UE may perform PUSCH transmission power control according to a condition, where the condition is that a gap (interval) between an end timing of scheduling DCI for PUSCH B (a last symbol of the DCI) and a start timing of PUSCH A (a first symbol of PUSCH A) is a given value (for example, a PUSCH preparation time), is larger than the given value, is smaller than the given value, or the like. The given value may be defined in a specification, or may be configured/indicated for the UE via higher layer signaling/physical layer signaling. The given value may be determined based on the UE capability information reported by the UE.

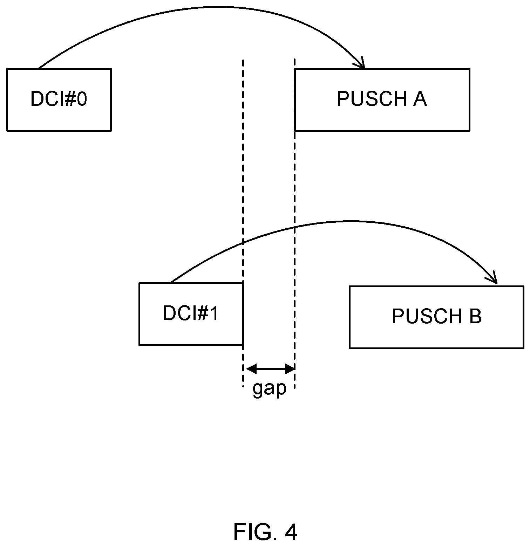

FIG. 4 is a diagram to show a first example in which PUSCH A overlaps PUSCH B. In the example of FIG. 4, DCI #0 schedules PUSCH A and DCI #1 schedules PUSCH B. The UE may perform control according to a condition, where the condition is that a gap between an end timing of DCI #1 (a last symbol of DCI #1) and a start timing of PUSCH A (a first symbol of PUSCH A) is a given value, is larger than the given value, is smaller than the given value, or the like.

For example, when the gap between the end timing of the scheduling DCI of PUSCH B (the last symbol of the DCI) and the start timing of PUSCH A (the first symbol of PUSCH A) is equal to or larger than the given value, the UE may determine the transmission power for transmission of entire PUSCH A by assuming multi-panel simultaneous transmission (option 3). Note that, in this case, the UE can recognize PUSCH #B overlapping PUSCH #A before transmission of PUSCH #A, and can thus determine the transmission power for PUSCH A by assuming multi-panel simultaneous transmission.

For example, when the gap between the end timing of the scheduling DCI of PUSCH B (the last symbol of the DCI) and the start timing of PUSCH A (the first symbol of PUSCH A) is smaller than the given value, the UE may determine the transmission power for entire PUSCH A by assuming single-panel transmission (option 4). Alternatively, when the gap is smaller than the given value, the UE may determine the transmission power for the time resources of PUSCH A overlapping PUSCH B by assuming multi-panel simultaneous transmission, and determine the transmission power for the time resources of PUSCH A not overlapping PUSCH B by assuming a single panel (option 2). Alternatively, when the gap is smaller than the given value, the UE need not expect that the total transmission power for the two PUSCHs exceeds the power limitation for each UE (option 1). When the gap is smaller than the given value, the UE may not recognize PUSCH B overlapping PUSCH A before transmission of PUSCH A. Thus, the UE may not be able to determine the transmission power for PUSCH A by assuming multi-panel simultaneous transmission.

<<Condition 3>>

When two PUSCHs overlap, the UE may perform PUSCH transmission power control according to a condition, where the condition is that a gap between a start timing of a preceding PUSCH (a PUSCH starting earlier with respect to time) (a first symbol of the preceding PUSCH) and a start timing of a succeeding PUSCH (a PUSCH starting later with respect to time) (a first symbol of the succeeding PUSCH) is a given value, is larger than the given value, or is smaller than the given value. The given value may be defined in a specification, or may be configured/indicated for the UE via higher layer signaling/physical layer signaling. The given value may be determined based on the UE capability information reported by the UE.

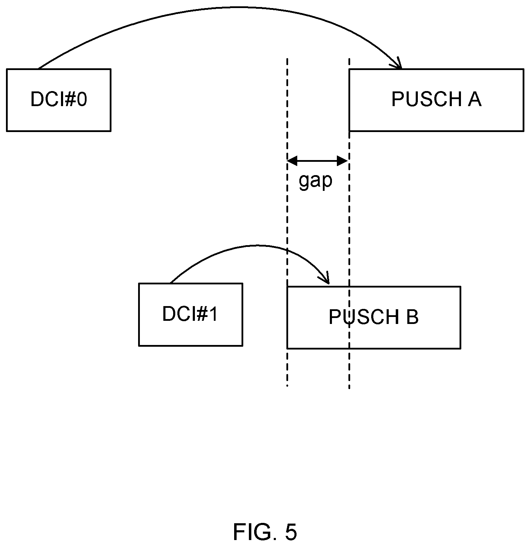

FIG. 5 is a diagram to show a second example in which PUSCH A overlaps PUSCH B. In the example of FIG. 5, DCI #0 schedules PUSCH A (succeeding PUSCH) and DCI #1 schedules PUSCH B (preceding PUSCH). The UE may perform PUSCH transmission power control according to a condition, where the condition is that a gap between a start timing of PUSCH B (a first symbol of PUSCH B) and a start timing of PUSCH A (a first symbol of PUSCH A) is a given value, is larger than the given value, is smaller than the given value, or the like.

In condition 3, processing in which "end timing of the scheduling DCI of PUSCH B" in the processing described in condition 2 is replaced by "start timing of the preceding PUSCH (PUSCH B)" may be performed.

Although PUSCH B is started at time earlier than PUSCH A, PUSCH B ending at time later than PUSCH A may or may not be supported. When PUSCH B is started at time earlier than PUSCH A and PUSCH B ends at time later than PUSCH A, the processing of condition 3 may be performed. In this case, when the UE determines the transmission power for PUSCH B and PUSCH A, the UE may invariably assume multi-panel simultaneous transmission. This is because the UE knows in advance that there is succeeding PUSCH A at the time of generating PUSCH B and knows in advance that there is preceding PUSCH B at the time of generating PUSCH A.

<<Specific Examples>>

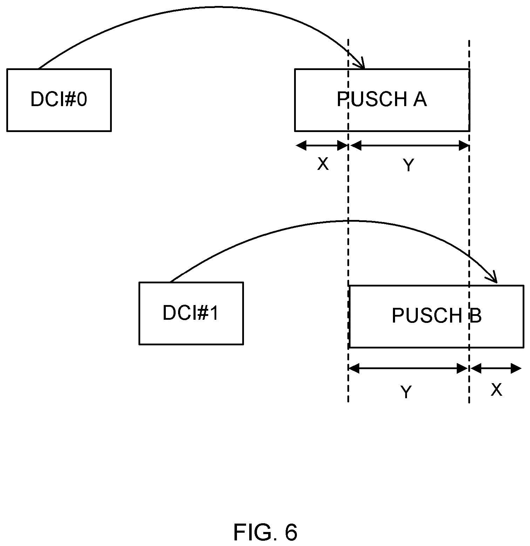

Specific examples according to the second embodiment will be described with reference to FIG. 6 to FIG. 9. In the examples of FIG. 6 to FIG. 9, DCI #0 schedules PUSCH A (preceding PUSCH) and DCI #1 schedules PUSCH B (succeeding PUSCH). PUSCH A overlaps PUSCH B. In the period of "X", the UE determines the transmission power for the PUSCHs by assuming single-panel transmission. In the period of "Y", the UE determines the transmission power for the PUSCHs by assuming multi-panel transmission.

In the example of FIG. 6, the UE determines the transmission power for PUSCH A and PUSCH B by assuming single-panel transmission in a period in which PUSCH A and PUSCH B do not overlap (option 2). The UE determines the transmission power for PUSCH A and PUSCH B by assuming multi-panel transmission in a period in which PUSCH A and PUSCH B overlap (option 2).

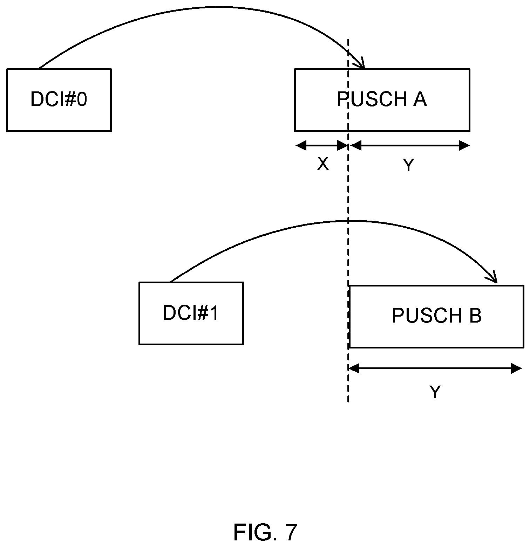

In the example of FIG. 7, the UE determines the transmission power for PUSCH A by assuming single-panel transmission in a period in which PUSCH A and PUSCH B do not overlap, and determines the transmission power for PUSCH A by assuming multi-panel transmission in a period in which PUSCH A and PUSCH B overlap (option 2). The UE determines the transmission power for entire PUSCH B by assuming multi-panel transmission (option 3).

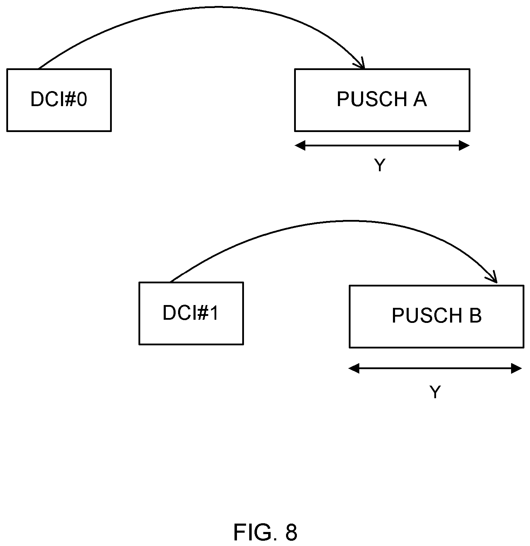

In the example of FIG. 8, the UE determines the transmission power for entire PUSCH A and the transmission power for entire PUSCH B by assuming multi-panel transmission (option 3).

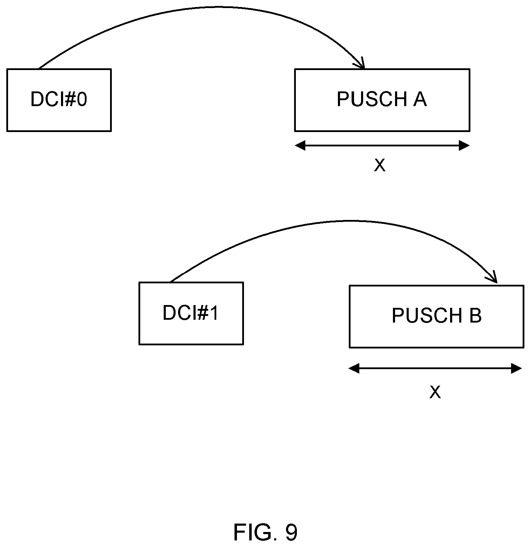

In the example of FIG. 9, the UE determines the transmission power for entire PUSCH A and the transmission power for entire PUSCH B by assuming single-panel transmission (option 4). Note that, in the example of FIG. 9, the transmission power for PUSCH A is not reduced due to the transmission power for PUSCH B. However, the transmission power for PUSCH B is reduced due to the transmission power for PUSCH A.

<Variations of Second Embodiment>

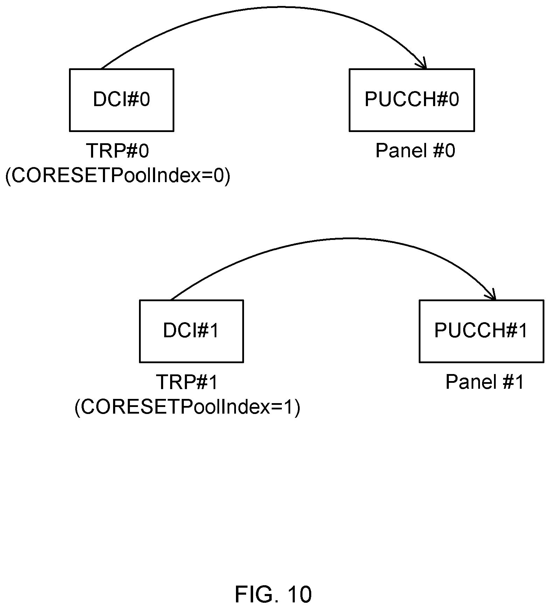

In the second embodiment, in the multi-panel simultaneous transmission PUSCHs in the multi-DCI and the multi-TRP, two DCIs schedule two PUSCHs overlapped in time. When two PUCCHs overlap with respect to time as well, similar processing may be performed (FIG. 10). In other words, "PUSCH" in the second embodiment may be replaced by "PUCCH". Such replacement may be performed when multi-DCI-based PUCCH transmission is supported. When the UE determines PUCCH transmission power by assuming multi-panel transmission, the UE may apply expression (7) as the PUCCH transmission power for each panel. When the UE determines the transmission power for the PUCCHs by assuming single-panel transmission, the UE may determine received power of the PUCCH similarly to Rel. 17 (for example, expression (2)).

In a variation, the UE may support multi-panel simultaneous transmission PUCCHs in the multi-DCI and the multi-TRP. In other words, transmission of two PUCCHs (PUCCH resources) overlapping with respect to time to different TRPs using different UE panels may be supported.

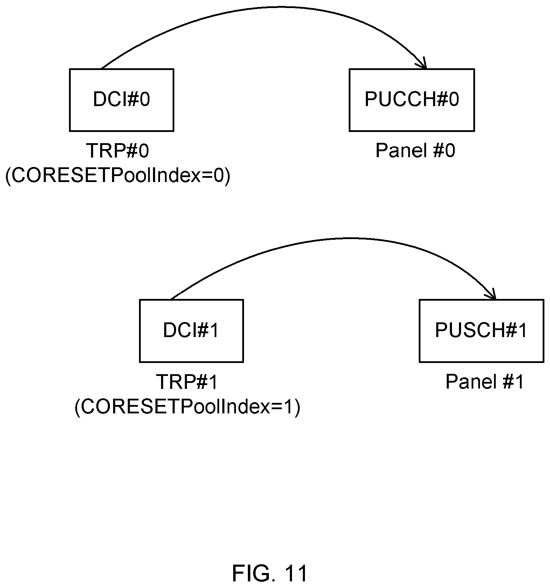

When a PUCCH and a PUSCH overlap, processing similar to that of the second embodiment may be performed (FIG. 11). In other words, one of the two overlapping PUSCHs in the second embodiment may be replaced by a PUCCH.

When two SRSs overlap with respect to time as well, the UE may perform processing similar to that of the second embodiment. In other words, "PUSCH" in the second embodiment may be replaced by "SRS". When an SRS and a PUSCH overlap, or an SRS and a PUCCH overlap, the UE may perform processing similar to that of the second embodiment. When the UE determines SRS transmission power by assuming multi-panel transmission, the UE may apply expression (8) as the SRS transmission power for each panel. When the UE determines the transmission power for the SRS by assuming single-panel transmission, the UE may determine received power of the SRS similarly to Rel. 17 (for example, expression (3)).

According to the second embodiment, even when the PUSCH/PUCCH/SRS transmitted from each panel overlaps, the UE can appropriately perform transmission power control.

<Third Embodiment>

When uplink (UL) simultaneous transmission from the multi-panel is supported and the transmission power for each component carrier (CC) (cell) exceeds the maximum transmission power (for example, $P_{CMAX,f,c}(i)$) for each CC, the UE may determine to reduce the transmission power for at least one panel or drop/cancel transmission from at least one panel. The UE may control UL transmission in accordance with the determination.

[Embodiment 3.1]

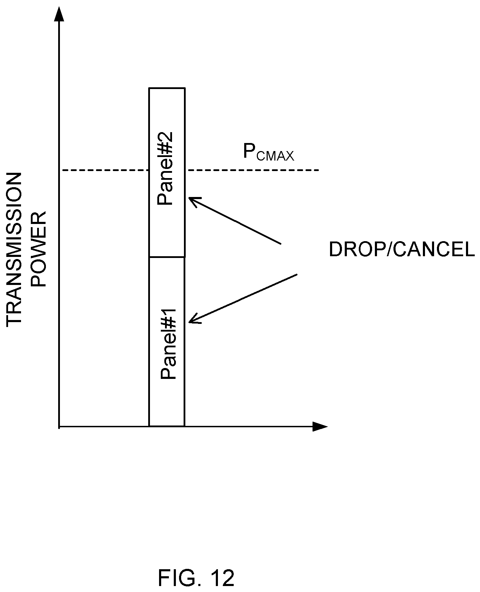

When the transmission power (actual transmission power) for each CC (cell) exceeds the maximum transmission power for each CC, the UE may drop/cancel (may determine to drop/cancel) all of the UL transmissions (all of the transmissions of the PUSCH/PUCCH/SRS) (FIG. 12). In other words, the UE need not transmit the PUSCH/PUCCH/SRS from any of the panels. Note that the base station (gNB) may perform control so that such a case does not occur. For example, the base station may reduce the transmission power for each panel, or apply time division multiplexing (TDM) between channels/RSs for each panel.

[Embodiment 3.2]

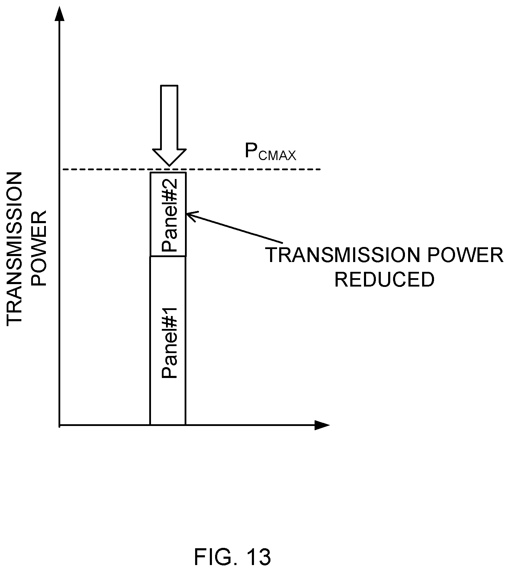

When the transmission power (actual transmission power) for each CC (cell) exceeds the maximum transmission power for each CC, the UE may reduce (determine to reduce) the transmission power for a part of the panels (one or a plurality of panels) and then perform UL transmission (transmission of the PUSCH/PUCCH/SRS) so that the transmission power is equal to or less than the maximum transmission power (FIG. 13). The actual transmission power may be one of transmission power calculated using an equation for each CC (expressions (1) to (3)) and transmission power calculated using the sum of equations for each panel (expressions (6) to (8)). When there are a plurality of panels, the UE may perform transmission of X panels having the lowest/highest indices without performing power reduction, and perform transmission of other panels by reducing power so that the transmission power is equal to or less than the maximum transmission power for each CC. The UE may drop/cancel the transmission of such other panels.

X may be configured/indicated by higher layer signaling/physical layer signaling, or may be configured/indicated based on a UE capability.

[Embodiment 3.3]

When the transmission power (actual transmission power) for each CC (cell) exceeds the maximum transmission power for each CC, the UE may reduce (determine to reduce) the transmission power for all of the panels and perform UL (PUSCH/PUCCH/SRS) transmission so that the transmission power is equal to or less than the maximum transmission power.

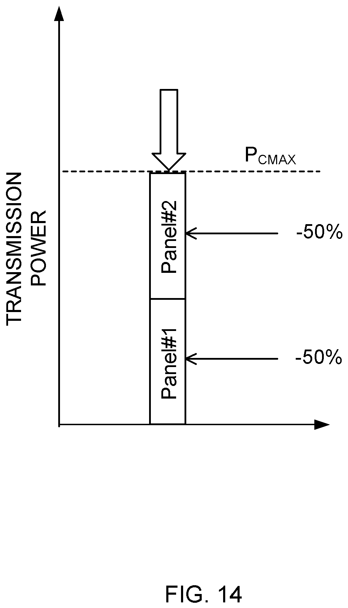

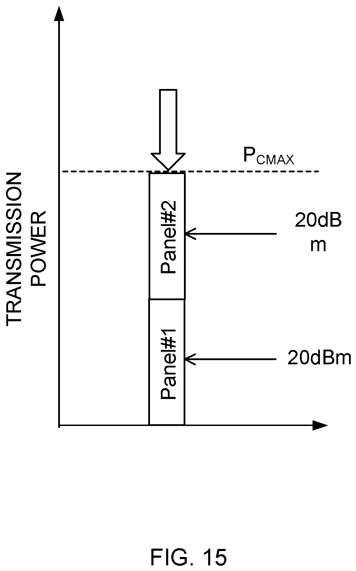

For example, the UE may reduce the calculated transmission power for each panel at the same percentage (for example, -50%) (FIG. 14). Alternatively, the UE may reduce the transmission power for all of the panels to equalize the transmission power for each panel (for example, 20 dBm) (FIG. 15). In other words, the transmission power for the panels may be reduced so that the transmission power for each panel is the maximum transmission power/number of panels.

[Variation of Embodiment 3.2]

The following will describe a variation of the case in which the transmission power for a part of the panels (one or a plurality of panels) is reduced in the case of Embodiment 3.2.

When transmission periods of two PUSCHs/PUCCHs/SRSs overlap, the UE may reduce the transmission power for a part of the panels and thereby reduce the transmission power for the PUSCHs/PUCCHs/SRSs that start/end late with respect to time.

When transmission periods of two PUSCHs/PUCCHs/SRSs overlap, the UE may reduce the transmission power for the PUSCHs/PUCCHs/SRSs whose corresponding scheduling DCIs start/end late with respect to time.

According to the third embodiment, even when the actual transmission power exceeds the maximum transmission power for each CC, UL transmission can be appropriately performed.

<Supplement>

For the multi-panel simultaneous transmission PUSCHs in the multi-DCI and the multi-TRP, the present disclosure describes two PUSCHs that overlap with respect to time and are associated with different TRPs/panels.
Two PUSCHs being associated with panels of different TRPs, scheduling DCI for two PUSCHs being associated with different CORESETPoolIndex, and two PUSCHs being associated with different panel IDs/UE capability value indices/TCI states/SRIs/SRS resource sets may be interchangeably interpreted.
The panel ID may refer to (correspond to) a capability value index/SRS resource set ID/other equivalent ID. A TRP ID may refer to (correspond to) CORESETPoolIndex, an SRS resource set ID, and another ID.

[Notification of Information to UE]

Notification of any piece of information from the network (NW) (for example, the base station (BS)) to the UE (i.e., reception of any piece of information in the UE from the BS) in the above-described embodiments may be performed using physical layer signaling (for example, DCI), higher layer signaling (for example, RRC signaling, a MAC CE), a specific signal/channel (for example, a PDCCH, a PDSCH, a reference signal), or a combination of these.
When the notification is performed using a MAC CE, the MAC CE may be identified by a new logical channel ID (LCID) not provided in existing standards being included in a MAC subheader.
When the notification is performed using DCI, the notification may be performed using a specific field in the DCI, a radio network temporary identifier (RNTI) used to scramble cyclic redundancy check (CRC) bits added to the DCI, a format of the DCI, or the like.
Notification of any piece of information to the UE in the above-described embodiments may be periodically, semi-persistently, or aperiodically performed.

[Notification of Information from UE]

Notification of any piece of information from the UE (to the NW) (i.e., transmission/reporting of any piece of information in the UE to the BS) in the above-described embodiments may be performed using physical layer signaling (for example, UCI), higher layer signaling (for example, RRC signaling, a MAC CE), a specific signal/channel (for example, a PUCCH, a PUSCH, a PRACH, a reference signal), or a combination of these.
When the notification is performed using a MAC CE, the MAC CE may be identified by a new LCID not provided in existing standards being included in a MAC subheader.
When the notification is performed using UCI, the notification may be transmitted using a PUCCH or a PUSCH.
Notification of any piece of information from the UE in the above-described embodiments may be periodically, semi-persistently, or aperiodically performed.

[Application of Each Embodiment]

At least one of the above-described embodiments may be applied when a specific condition is satisfied. The specific condition may be provided in a standard, or may be notified to the UE/BS using higher layer signaling/physical layer signaling.
At least one of the above-described embodiments may be applied only to the UE that has reported a specific UE capability or that supports the specific UE capability.
The specific UE capability may indicate at least one of the following:

- Support of specific processing/operation/control/information regarding at least one of the embodiments described above.
- Support of multi-panel simultaneous transmission in a multi-DCI and a multi-TRP. For example, the second/third embodiment may be applied when the multi-panel simultaneous transmission in the multi-DCI and the multi-TRP is supported.

The specific UE capability may be capability applied over all the frequencies (commonly irrespective of frequency), may be capability per frequency (for example, one or a combination of a cell, a band, a band combination, a BWP, a component carrier, and the like), may be capability per frequency range (for example, Frequency Range 1 (FR1), FR2, FR3, FR4, FR5, FR2-1, FR2-2), may be capability per subcarrier spacing (SCS), or may be capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when specific information related to the above-described embodiments (or performing operation of the above-described embodiments) is configured/activated/triggered for the UE by higher layer signaling/physical layer signaling.

When not supporting at least one of the specific UE capabilities or not configured with the specific information, the UE may apply operation of Rel. 15/16, for example.

(Supplementary Note)

Regarding one embodiment of the present disclosure, the following supplementary notes of the invention will be given.

{Supplementary Note 1}

A terminal including:

a receiving section that receives two downlink control informations (DCIs), the two DCIs scheduling two physical uplink shared channels (PUSCHs) overlapped in time, the two PUSCHs being related to different panels; and
a control section that determines transmission power for the two PUSCHs by assuming at least one of multi-panel simultaneous transmission and single-panel transmission.

{Supplementary Note 2}

The terminal according to supplementary note 1, wherein the control section determines the transmission power for the two PUSCHs in time resources overlapped by the two PUSCHs by assuming the multi-panel simultaneous transmission, and determines the transmission power for at least one PUSCH of the two PUSCHs in the time resources not overlapped by the two PUSCHs by assuming the single-panel transmission.

{Supplementary Note 3}

The terminal according to supplementary note 1 or 2, wherein
the control section determines the transmission power for at least one entire PUSCH of the two PUSCHs by assuming one of the multi-panel simultaneous transmission and the single-panel transmission.

{Supplementary Note 4}

The terminal according to any one of supplementary notes 1 to 3, wherein
the control section determines maximum transmission power for each panel by using a requirement defined based on a peak effective isotropic radiated power (EIRP) measurement value for each panel and a total radiated power measurement value for each panel.

(Supplementary Note)

Regarding one embodiment of the present disclosure, the following supplementary notes of the invention will be further given.

{Supplementary Note 1}

A terminal including:

a receiving section that receives two downlink control informations (DCIs), the two DCIs scheduling two physical uplink control channels (PUCCHs) overlapped in time, the two PUCCHs being related to different panels; and
a control section that determines transmission power for the two PUCCHs by assuming at least one of multi-panel simultaneous transmission and single-panel transmission.

{Supplementary Note 2}

The terminal according to supplementary note 1, wherein
the control section determines the transmission power for the two PUCCHs in time resources overlapped by the two PUCCHs by assuming the multi-panel simultaneous transmission, and determines the transmission power for at least one PUCCH of the two PUCCHs in the time resources not overlapped by the two PUCCHs by assuming the single-panel transmission.

{Supplementary Note 3}

The terminal according to supplementary note 1 or 2, wherein
the control section determines the transmission power for at least one entire PUCCH of the two PUCCHs by assuming one of the multi-panel simultaneous transmission and the single-panel transmission.

{Supplementary Note 4}

The terminal according to any one of supplementary notes 1 to 3, wherein
the control section determines maximum transmission power for each panel by using a requirement defined based on a peak effective isotropic radiated power (EIRP) measurement value for each panel and a total radiated power measurement value for each panel.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

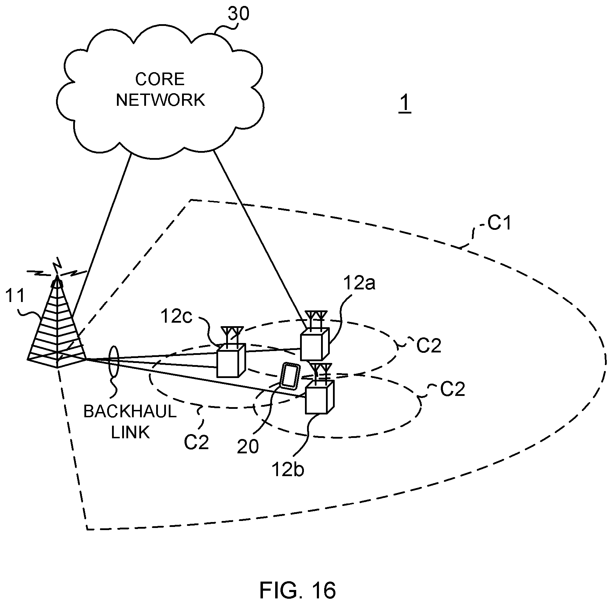

FIG. 16 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR), and so on, whose specifications have been drafted by the Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).
The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.
The user terminal 20 may be connected to at least one of the plurality of base stations 10. The user terminal 20 may use at least one of carrier aggregation (CA) and dual connectivity (DC) using a plurality of component carriers (CCs).
Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.
The user terminal 20 may communicate using at least one of time division duplex (TDD) and frequency division duplex (FDD) in each CC.
The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

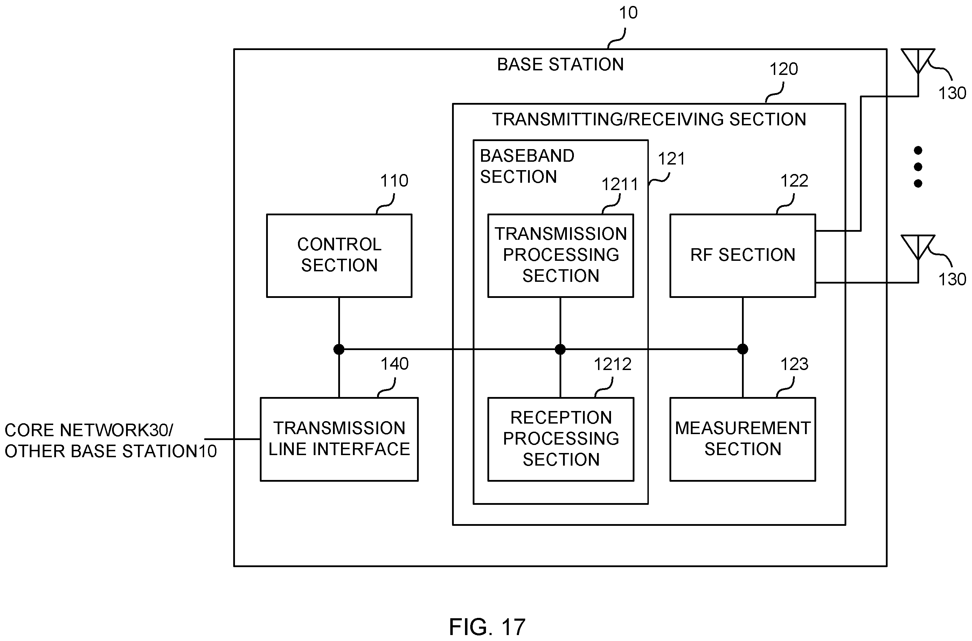

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit two downlink control informations (DCIs). The two DCIs may schedule two physical uplink shared channels (PUSCHs) overlapped in time, and the two PUSCHs may be related to different panels.

The control section 110 may control reception of the two PUSCHs, with at least one of multi-panel simultaneous transmission and single-panel transmission being assumed and transmission power for the two PUSCHs being determined.

Note that the transmitting/receiving section 120 may transmit two downlink control informations (DCIs). The two DCIs may schedule two physical uplink control channels (PUCCHs) overlapped in time, and the two PUCCHs may be related to different panels.

The control section 110 may control reception of the two PUCCHs, with at least one of multi-panel simultaneous transmission and single-panel transmission being assumed and transmission power for the two PUCCHs being determined.

(User Terminal)

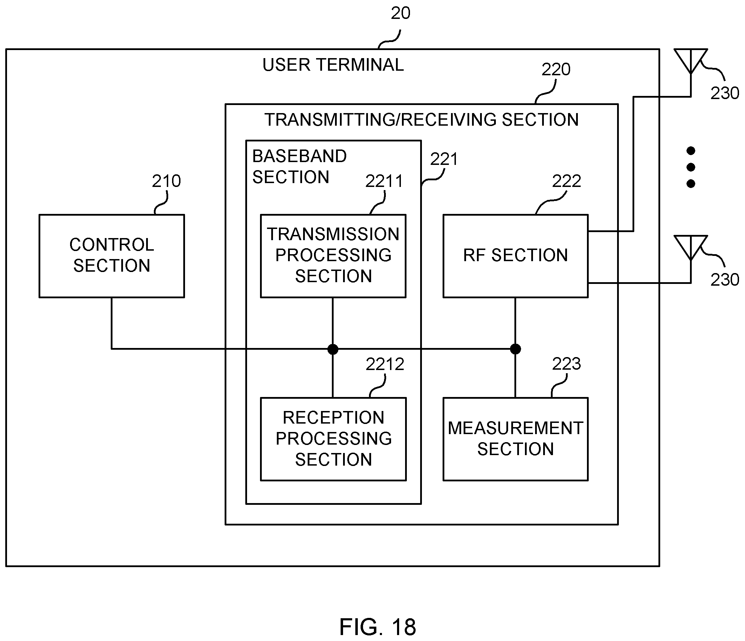

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive two downlink control informations (DCIs). The two DCIs may schedule two physical uplink shared channels (PUSCHs) (or physical uplink control channels (PUCCHs)) overlapped in time, and the two PUSCHs (or PUCCHs) may be related to different panels.

The control section 210 may determine transmission power for the two PUSCHs (or PUCCHs) by assuming at least one of multi-panel simultaneous transmission and single-panel transmission.

The control section 210 may determine the transmission power for the two PUSCHs (or PUCCHs) in time resources overlapped by the two PUSCHs (or PUCCHs) by assuming the multi-panel simultaneous transmission, and determine the transmission power for at least one PUSCH (or PUCCH) of the two PUSCHs (or PUCCHs) in the time resources not overlapped by the two PUSCHs (or PUCCHs) by assuming the single-panel transmission.

The control section 210 may determine the transmission power for at least one entire PUSCH (or PUCCH) of the two PUSCHs (or PUCCHs) by assuming one of the multi-panel simultaneous transmission and the single-panel transmission.

The control section 210 may determine maximum transmission power for each panel by using a requirement defined based on a peak effective isotropic radiated power (EIRP) measurement value for each panel and a total radiated power measurement value for each panel.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

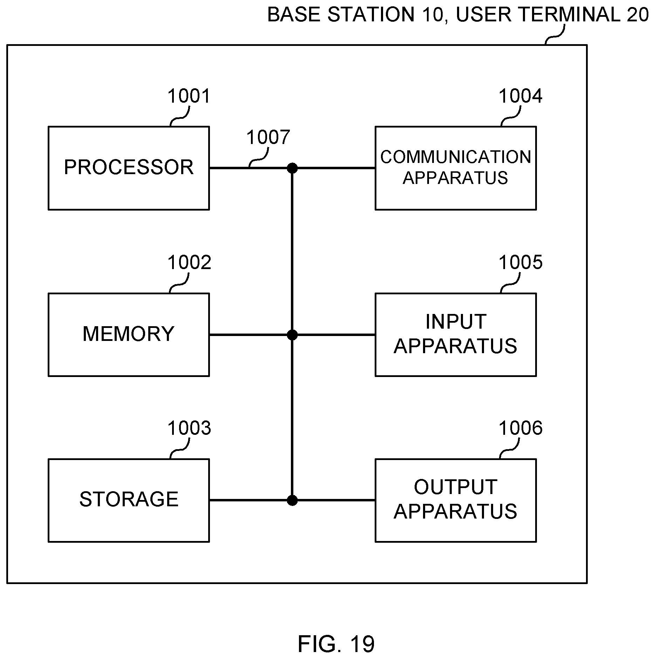

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

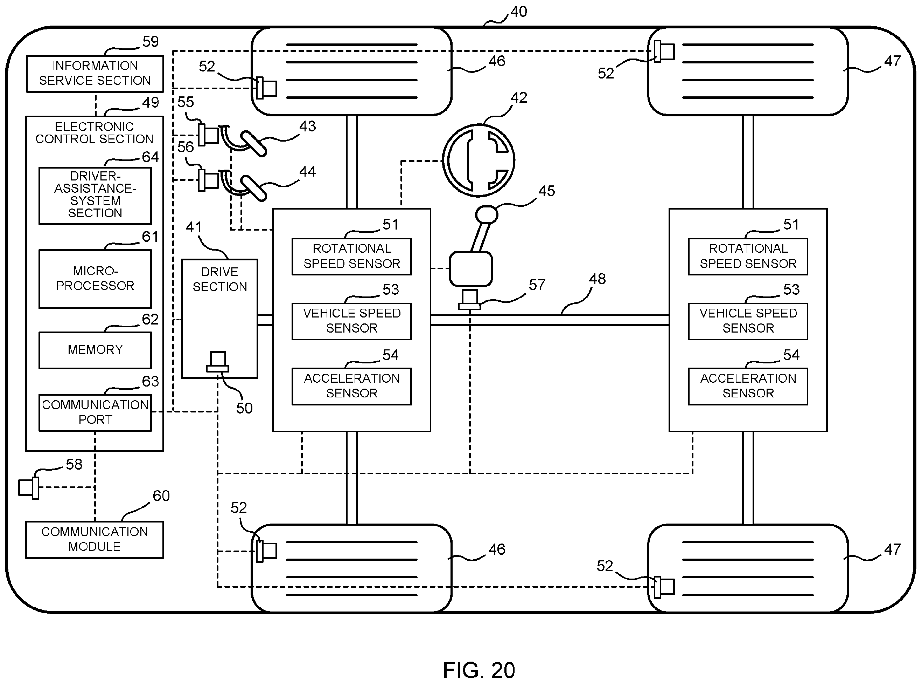

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

**Claims**

1. A terminal comprising:

   a receiving section that receives two downlink control informations (DCIs), the two DCIs scheduling two physical uplink control channels (PUCCHs) overlapped in time, the two PUCCHs being related to different panels; and
   a control section that determines transmission power for the two PUCCHs by assuming at least one of multi-panel simultaneous transmission and single-panel transmission.

2. The terminal according to claim 1, wherein
   the control section determines the transmission power for the two PUCCHs in time resources overlapped by the two PUCCHs by assuming the multi-panel simultaneous transmission, and determines the transmission power for at least one PUCCH of the two PUCCHs in the time resources not overlapped by the two PUCCHs by assuming the single-panel transmission.

3. The terminal according to claim 1, wherein
   the control section determines the transmission power for at least one entire PUCCH of the two PUCCHs by assuming one of the multi-panel simultaneous transmission and the single-panel transmission.

4. The terminal according to claim 1, wherein
   the control section determines maximum transmission power for each panel by using a requirement defined based on a peak effective isotropic radiated power (EIRP) measurement value for each panel and a total radiated power measurement value for each panel.

5. A radio communication method for a terminal, the radio communication method comprising:

   receiving two downlink control informations (DCIs), the two DCIs scheduling two physical uplink control channels (PUCCHs) overlapped in time, the two PUCCHs being related to different panels; and

determining transmission power for the two PUCCHs by assuming at least one of multi-panel simultaneous transmission and single-panel transmission.

6. A base station comprising:

a transmitting section that transmits two downlink control informations (DCIs), the two DCIs scheduling two physical uplink control channels (PUCCHs) overlapped in time, the two PUCCHs being related to different panels; and

a control section that controls reception of the two PUCCHs, with at least one of multi-panel simultaneous transmission and single-panel transmission being assumed and transmission power for the two PUCCHs being determined.

## FIG. 1A

## FIG. 1B

## FIG. 1C

FIG. 2A

PUCCH RESOURCE #1

PANEL/BEAM #1

PANEL/BEAM #2

PUCCH RESOURCE #2

TRP#1

TRP#2

FIG. 2B

PUCCH RESOURCE

PANEL/BEAM #1

PANEL/BEAM #2

TRP#1

TRP#2

FIG. 3

FIG. 4

DCI#0

PUSCH A

gap

DCI#1

PUSCH B

FIG. 5

FIG. 6

FIG. 7

FIG. 8

DCI#0

PUSCH A

X

DCI#1

PUSCH B

X

FIG. 9

FIG. 10

FIG. 11

FIG. 12

FIG. 13

FIG. 14

FIG. 15

FIG. 16

FIG. 17

EP 4 576 890 A1

FIG. 18

EP 4 576 890 A1

BASE STATION 10, USER TERMINAL 20

FIG. 19

FIG. 20

## INTERNATIONAL SEARCH REPORT

| | International application No. |
|---|---|
| | **PCT/JP2022/031409** |

**A.     CLASSIFICATION OF SUBJECT MATTER**

*H04W 52/42*(2009.01)i; *H04W 16/28*(2009.01)i; *H04W 52/32*(2009.01)i; *H04W 88/02*(2009.01)i
FI:     H04W52/42; H04W16/28; H04W52/32; H04W88/02 140

According to International Patent Classification (IPC) or to both national classification and IPC

**B.     FIELDS SEARCHED**

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | QUALCOMM INCORPORATED. Simultaneous multi-panel transmission [online]. 3GPP TSG RAN WG1 #109-e R1-2205019. Internet <URL: https://www.3gpp.org/ftp/tsg_ran/ WG1_RL1/TSGR1_109-e/Docs/R1-2205019.zip>, 29 April 2022 | 1-3, 5-6 |
| | pages 4-5, 7 | |
| Y | pages 4-5, 7 | 4 |
| Y | LG ELECTRONICS. Unified TCI framework extension for multi-TRP/panel [online]. 3GPP TSG RAN WG1 #110 R1-2206866. Internet <URL: https://www.3gpp.org/ftp/tsg_ran/ WG1_RL1/TSGR1_110/Docs/R1-2206866.zip>, 12 August 2022 | 4 |
| | page 5 | |
| A | NOKIA, NOKIA SHANGHAI BELL. Unified TCI framework extension for multi-TRP [online]. 3GPP TSG RAN WG1 #110 R1-2207544. Internet <URL: https://www.3gpp.org/ftp/ tsg_ran/WG1_RL1/TSGR1_110/Docs/R1-2207544.zip>, 12 August 2022 | 1-6 |
| | entire text, all drawings | |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010